# EUROPEAN PATENT APPLICATION

(11) **EP 3 649 840 A1**
(43) Date of publication of application: **13.05.2020**
(21) Application number: 19020618.5
(22) Date of filing: 05.11.2019
(51) Int. Cl.: A01B 63/02, A01D 34/86

(54) **APPARATUS FOR SUPPORTING A WORKING HEAD**

(30) Priority: 06.11.2018 IT 201800010084
(71) Applicant: ORSI Group S.R.L., 40050 Mascarino di Castello d'Argi (BO) (IT)
(72) Inventor: Orsi, Stefano, 40050 Mascarino di Castello d'Argile (BO) (IT)
(74) Representative: Mincone, Antimo

(57) **Abstract**

An apparatus for supporting a working head (T), usable interposed between a driving machine (M) and a working head (T) and comprising: a first frame (2) provided with means for connection to the driving machine (M); a second frame (3) connected to the first frame (2); first moving means (5) arranged and acting between said first frame (2) and said second frame (3), adapted to translate the second frame (3) bidirectionally with respect to the first frame (2); a carriage (4) provided with support and connection means (41, 42) for a working head; second moving means (6) arranged and acting between said second frame (3) and said carriage (4) the apparatus (1) comprises an additional connecting and moving element (8) shaped so as to be arranged and acting between the carriage (4) and the working head (T) to vary the distance between the latter.

## Description

The present invention relates to an apparatus for connecting an agricultural machine to a working head; the invention relates to an apparatus for agricultural and similar machines (including those for forest use, road and riverbed maintenance, etc.), usable for the support of a working head which can be, for example, a bush-cutter, a shredder, a ditcher, etc.

The characteristics and drawbacks of the apparatuses of this type are described in EP-3318114 of the same applicant who has proposed an innovative solution suitable to adequately satisfy the problems of the state of the art.

In practice, the apparatus can be used to support an operating head, interposed between a driving machine and an operating head (or an accessory or an operating machine) to transmit the motion from the driving machine to the operating head and to move the latter in respect to the driving machine.

The apparatus comprises: - a first frame provided with means for the connection to the driving machine; - a second frame connected to the first frame; - first moving means arranged and acting between the first frame and the second frame, adapted to translate the second frame bidirectionally with respect to the first frame along a direction substantially orthogonal with respect to the moving direction of the driving machine; - a carriage provided with support and connection means for a working head; - second moving means arranged and acting between the second frame and the carriage, able to translate the carriage bidirectionally with respect to the second frame along a substantially orthogonal direction with respect to the moving direction of the driving machine.

The present patent application proposes to provide an alternative solution to the one proposed in EP-3318114 by means of an apparatus having the characteristics described in the independent claim. Other features are the subject of the dependent claims.

Among the advantages of the present invention the following may be listed: the apparatus is of relatively simplified construction requiring the use of components characterized by simplicity and sturdiness such as to provide the apparatus, in combination with the high structural functionality, characteristics that remain unaffected even after prolonged use; the apparatus allows an optimization of the movement of a second frame with respect to the first which is associated with a tractor, and of the second frame with respect to a carriage which carries the working head, with the interposition of an additional movement element between the carriage and the head; the apparatus comprises an additional connecting and moving element shaped so as to be arranged and acting between the carriage and the working head, and provided with moving means adapted to vary the distance between the carriage and the working head, said additional moving means comprising a proximal portion which is integral with the carriage and a distal portion which is integral with the working head; that the moving means which vary the distance between the carriage and the working head can advantageously consist of a linear actuator which has a proximal portion directly integral with the carriage and a distal portion directly integral with the working head; the apparatus can comprise a supply system for the motor of the working head formed in a substantially exclusive manner by means of telescopic rigid tubes which pass internally, eliminating the possible disadvantages deriving from the passage of a supply by flexible tubes; the second moving means can comprise a first and a second cylinder whose sheaths are integral with each other and whose stems are arranged opposite, with a first head of a first stem integral with the second frame and with a second head of a second stem integral to the carriage; the operation of the machine, even if it provides undoubted operational advantages, is of simple intuition on the part of the operators, who are able to make the most of its functionality even after a short period of use; that it is possible to carry out the necessary cutting and / or shredding work quickly and safely, even at the same longitudinal axis of the tractor (i.e. with the cutting head arranged centrally); the apparatus can be mounted both front and rear of the self-propelled machine; the apparatus is suitable to work at a very high distance from the longitudinal axis of the tractor and, at the same time, has a very small encumbrance in width, that is such as to allow a road use in accordance with the rules of the Highway Code; with the machine in question it is possible to work on inclined planes with respect to the ground level on which the machine drive is moved.

These and further advantages and features of the present invention will be better understood by every person skilled in the art from the following description and with the aid of the attached drawings, given as a practical exemplification of the invention, but not to be considered in a limiting sense, in which:
- Fig.1 shows, in a schematic plan view from above, a possible embodiment of an apparatus according to the invention;

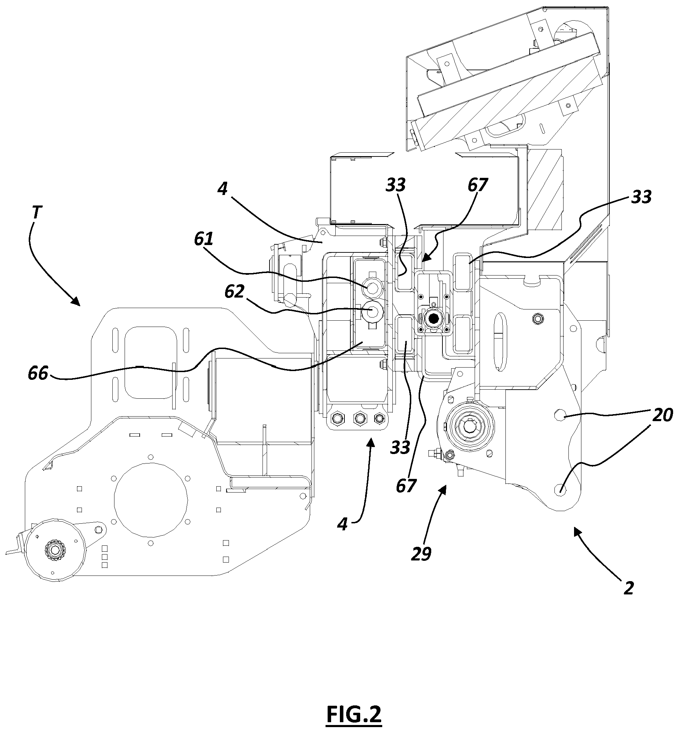

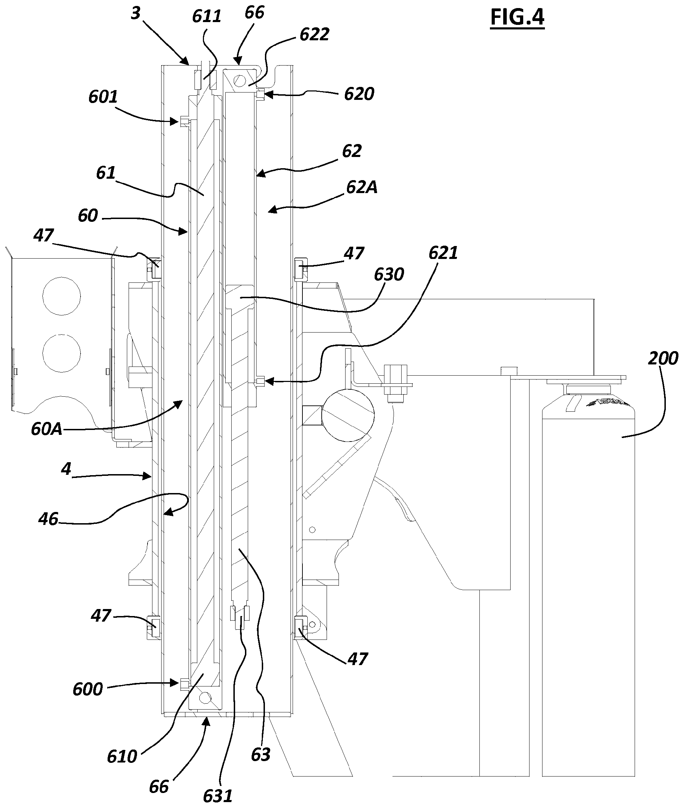

- Figs. 2, 3 and 4 are sectional views according to lines A-A, B-B and D-D respectively of Fig. 1;

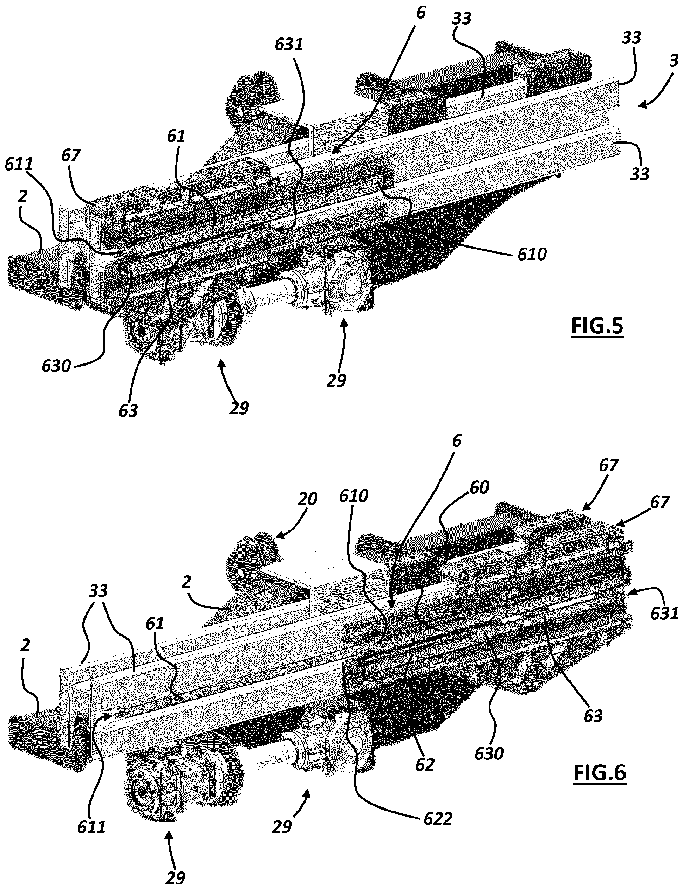

- Figs. 5 and 6 are two schematic perspective views of the apparatus, represented in two possible operating configurations without the working head and with parts removed;
- Figs. 7, 8 and 9 are three schematic perspective views of the apparatus represented in possible operative configurations with the working head associated with the apparatus; in the drawings the working head is in configuration of maximum lateral extension (Fig.7), in vertical configuration (Fig.8) and in configuration of minimum lateral extension (Fig.9);
- Figs. 10 and 11 are two side schematic views with removed parts of a detail of the apparatus relating to the moving means acting between the first and second frame, represented, respectively, in a retracted configuration (Fig. 10) and in a extended configuration (Fig. 11);
- Fig. 12 is a top view showing schematically a possible embodiment of an additional connection and movement element placed between a carriage and an operating or working head;
- Figs. 13 and 14 are enlarged details of Fig. 12 which represent, in a schematic way, the additional connecting and moving element in a minimum extension configuration and in one in which it is extended;
- Fig. 15 is another schematic view similar to that of Fig. 13 in which, again in a schematic way, another possible embodiment of the additional connection and movement element is shown wherein a cylinder forming part of the moving means is arranged with the stem integral with the head instead of the carriage as in the drawings of Figs. 12-14;

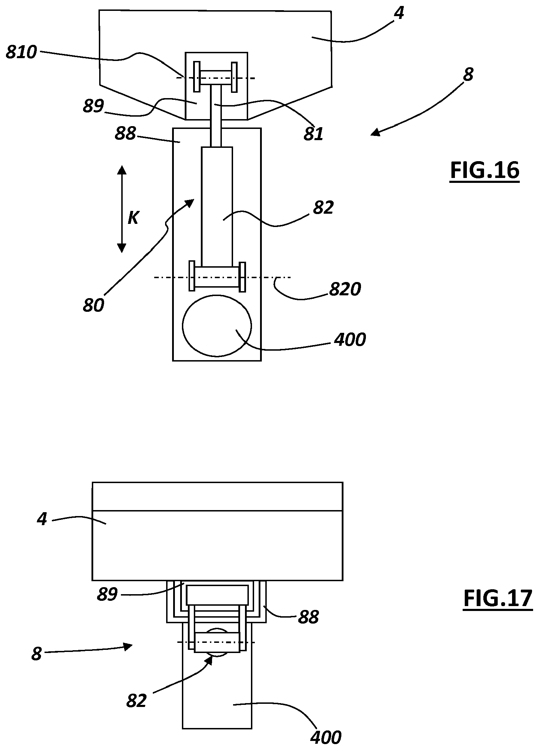

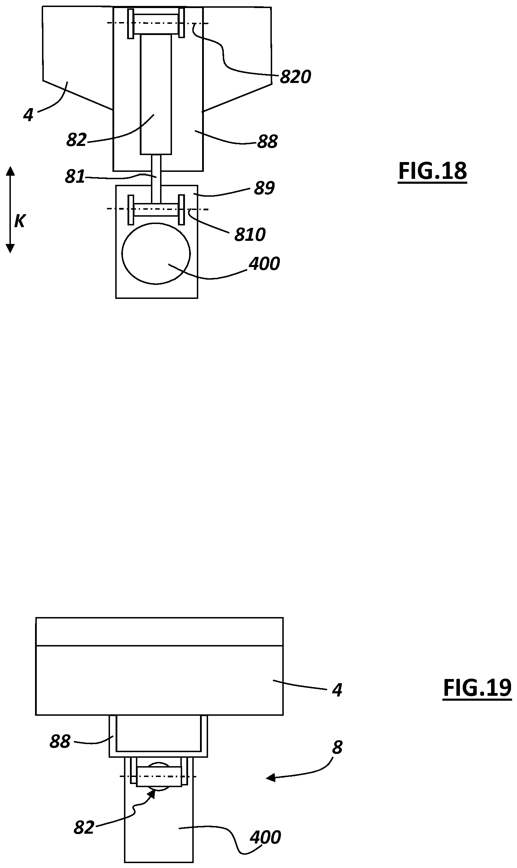

- Figs. 16, 17, 18 and 19 schematically show another possible embodiment of an additional connection and movement element between a carriage and an operating or working head; in this solution the cylinder that defines the moving means is placed vertically; in particular, Figs. 16 and 17 are a schematic front view and a schematic plan view of an embodiment in which the cylinder is fixed with the stem to a portion of the additional element integral with the carriage and with the sheath to a portion integral with the support for the working head, while Figs. 18 and 19 are a schematic front view and a schematic plan view of another embodiment in which the cylinder is fixed with the sheath to a portion integral with the carriage and with the stem to a portion integral with the support for the working head;

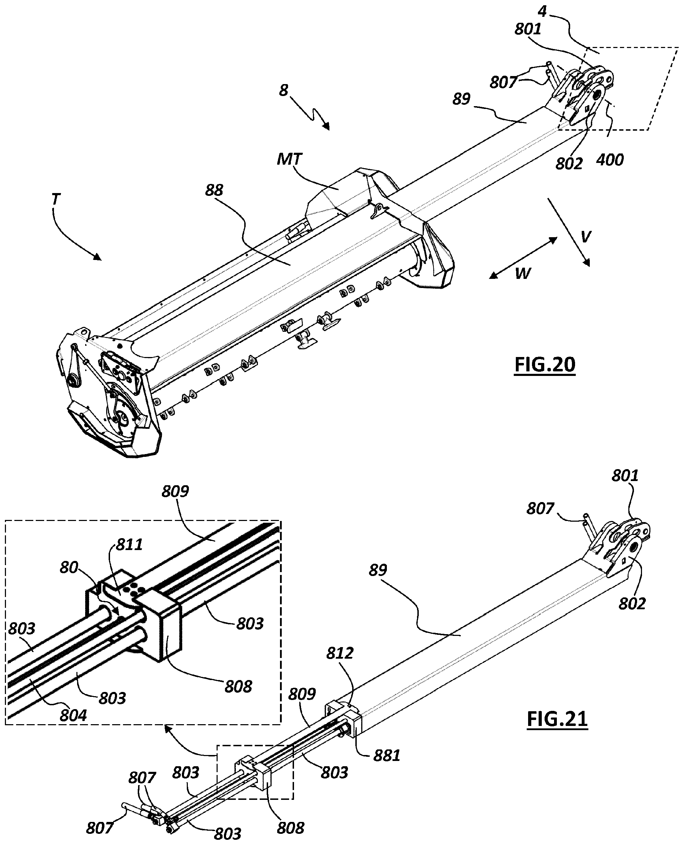

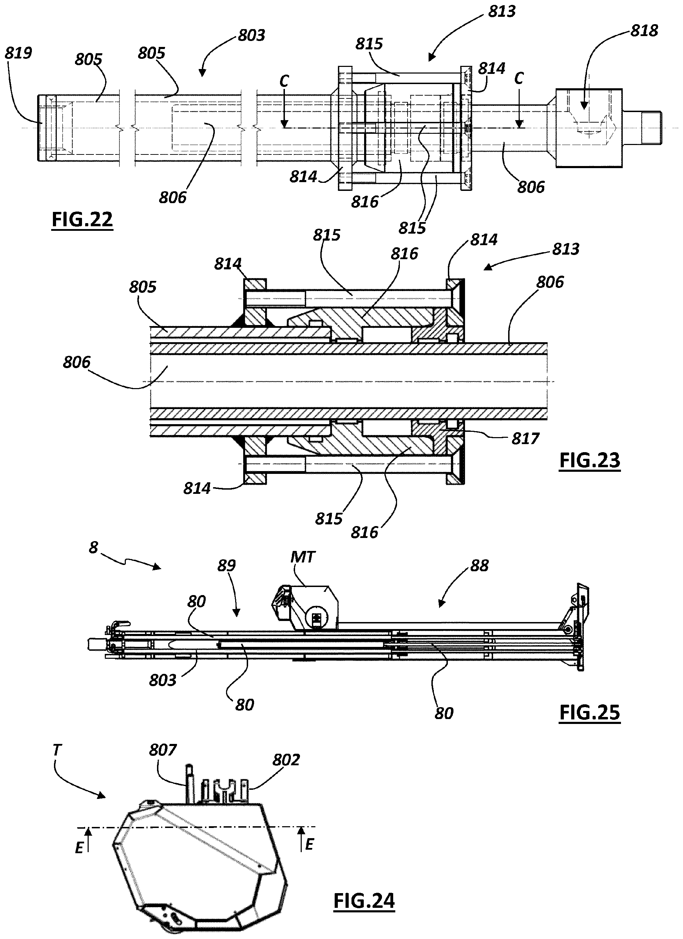

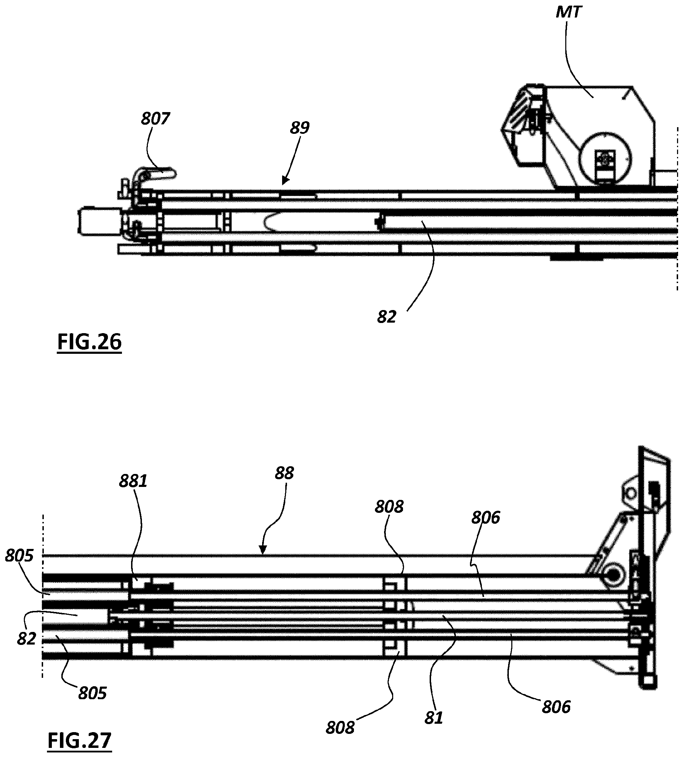

- Figs. 20, 21, 22, 23, 24, 25, 26 and 27 relate to a possible embodiment of the additional connection element between the carriage and the working head; in particular, Fig. 20 is a schematic perspective view in which the additional element is in a configuration of maximum extension, Fig. 21 is a view similar to that of Fig. 20 in which some parts of the head of work have been removed to highlight others and a detail is enlarged, Fig. 22 relates to a plan view with parts in transparency of a supply duct usable for moving the additional element, Fig. 23 relates to an enlarged detail of a sectional view along the line C-C of Fig.22, Fig. 24 is a schematic side view of the working head, Fig. 25 is a schematic view with parts removed according to the section line E-E of Fig. 24, and Figs. 26 and 27 show Fig. 25 divided into two parts to represent it in an enlarged view.

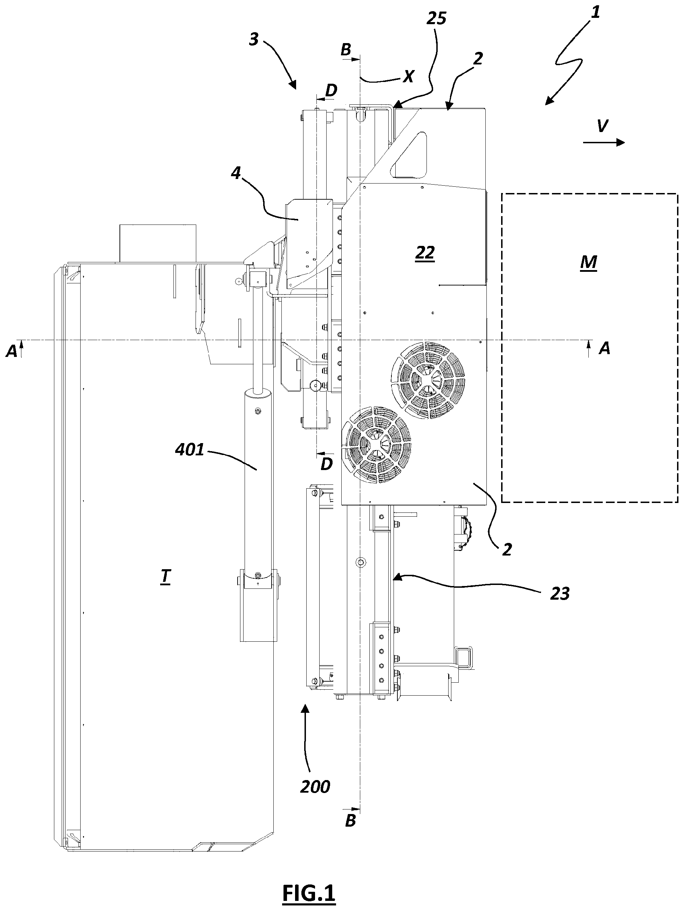

With reference to the enclosed non-limiting drawings, an apparatus (1) made in accordance with the invention can be used interposed between a driving machine (M) and an operating head (T) to transmit the motion from the driving machine (M) to the operating head (T) and to move the latter with respect to the driving machine (M). In Fig. 1 the driving machine (M), which can be an agricultural tractor provided in a known manner with a three-point hitch and a power take-off, is represented schematically by a block (M) in a discontinuous section; with (V) the movement direction of this machine (M) is indicated.

In practice, the driving machine (M) can be an agricultural tractor or a similar machine capable of moving an operating head, supplying the latter with motion.

The apparatus (1) comprises a first frame (2), a second frame (3) and a carriage (4), connected to each other in cascade; the set of these three elements (2, 3, 4) is upstream connected to the motor (M), from which it is supported, and downstream connected to the operating head (T) to carry the latter, which may be constituted by a bush-cutter, a shredder, a ditcher, a forestry equipment, etc. In the present description the terms working head, operating head or accessory can be used in an equivalent manner.

The first frame (2) is provided with means for the connection to the driving machine (M); in practice, the first frame (2) is provided with a system of attachments (20) which makes it, in a per se known manner, complementarily associable with the three-point hitch of the tractor (M); moreover, the apparatus (1) is provided with means for connection to the power take-off of the same driving machine (M), indicated in general with (29) in the drawings. On the first frame devices and command and control means, marked with reference (22) in general, can be supported.

The first frame (2) is also provided with a lower roller (200) for resting on the ground. This facilitates the movement of the apparatus (1) on the ground, both when the apparatus operates at the same height as the self-propelled machine, and when it operates at a different altitude. The roller (200) is also used to support the apparatus (1) during the parking phases.

First moving means (5) are provided between the first frame (2) and the second frame (3), said first moving means are shaped so as to move the second frame (3) bidirectionally with respect to the first frame (2) along a substantially orthogonal direction with respect to the movement direction (V) of the driving machine (M); in practice, the moving means (5) can move the second frame (3) to the right and to the left with respect to the first frame (2) in a reference which has as its longitudinal axis the direction (V) of movement of the tractor (M).

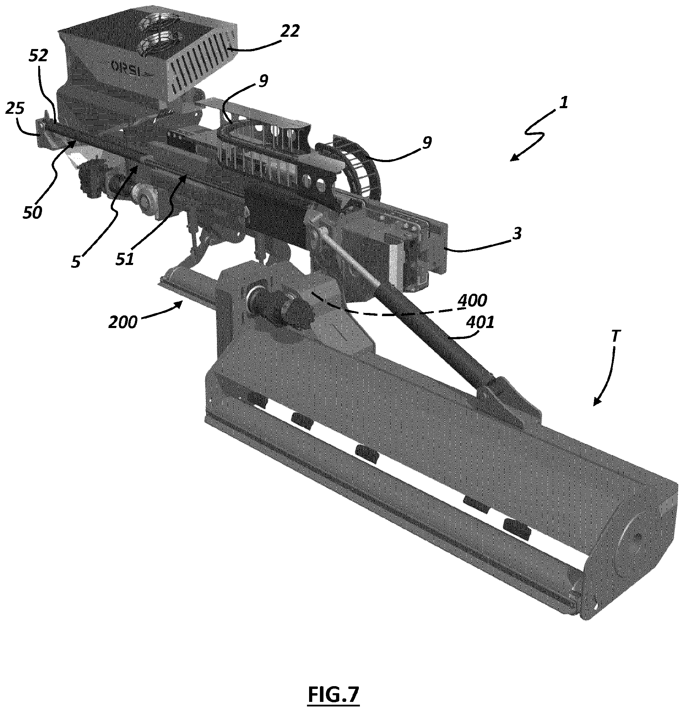

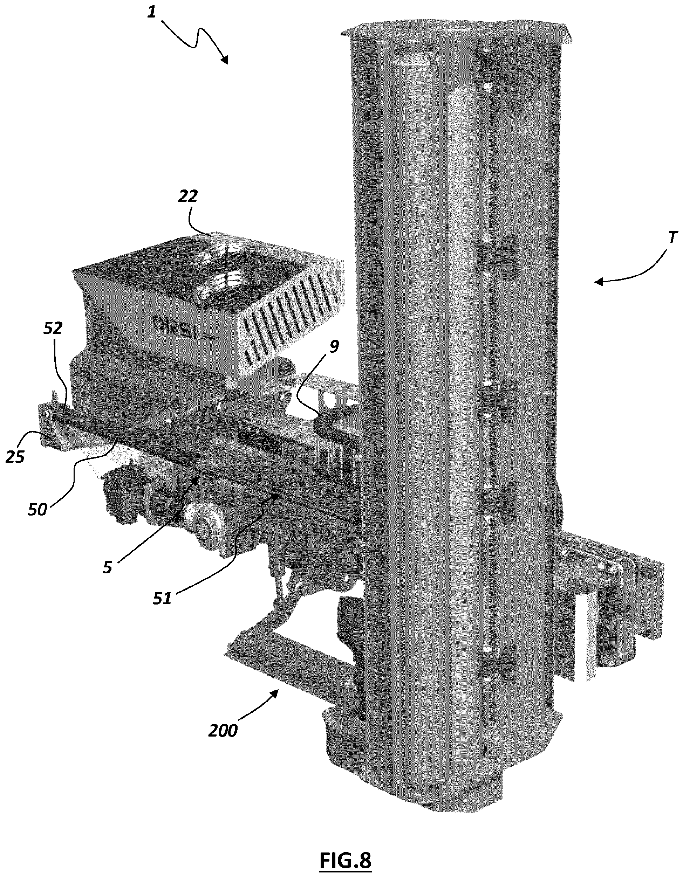

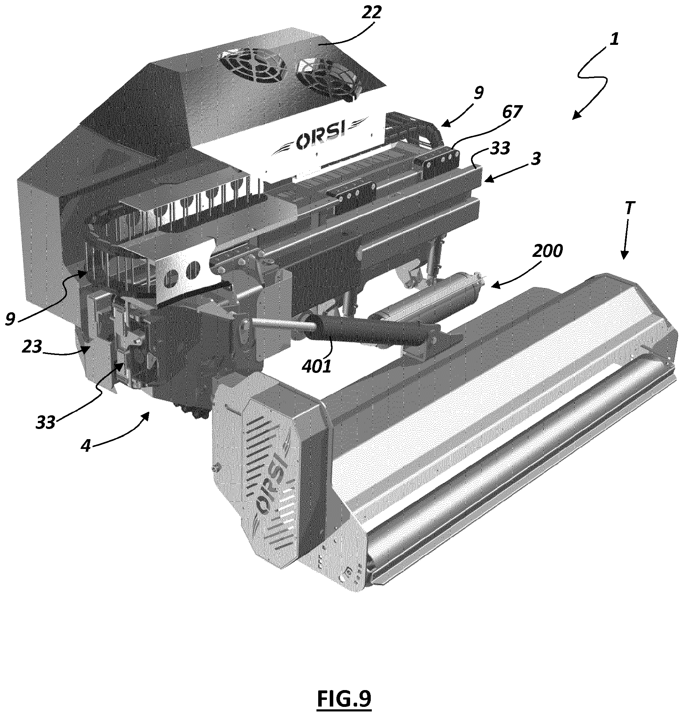

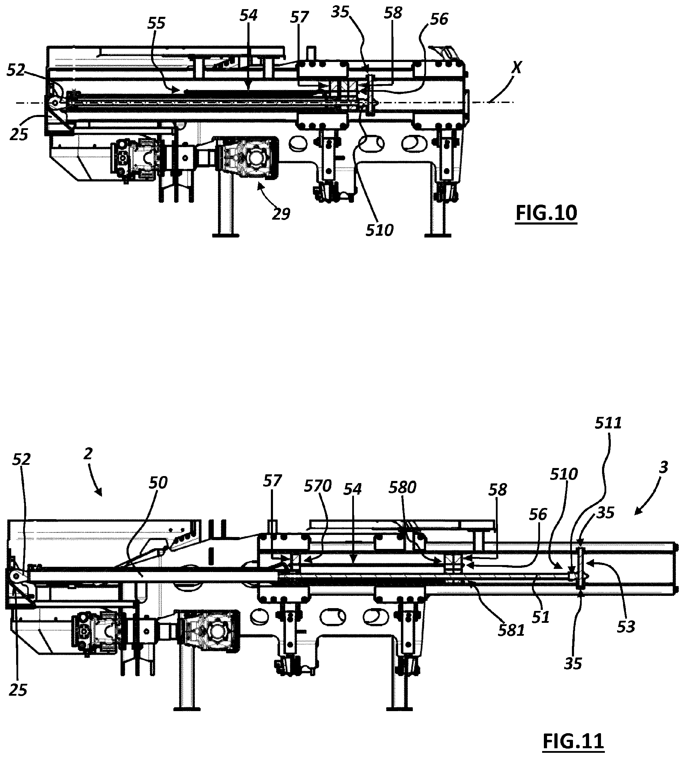

In particular, the first moving means (5) comprise a hydraulic cylinder whose outer sheath (50) is fixed in one of its ends (52) to a bracket (25) of the first frame (2). The longitudinal axis of the cylinder is indicated by X in the drawings. The external end (510) of the stem (51) which slides in the cylinder (50) is fixed to the second frame (3) so as to move it bidirectionally according to the operating configurations that the apparatus (1) must assume. With reference to the attached drawings, the outer end (510) is fixed to a connecting element (53) which is keyed to the second frame (3); in particular, the opposite portions of the element (53) (arranged upwards and downwards) are firmly received in corresponding seats (35) provided on the second frame (3). In this way, the displacement of the outer end (510) which is integral with the second frame (3) determines the corresponding displacement of the same frame (3) with respect to the first frame (2) which is integral with the sheath (50) of the cylinder (5) via the end (52). For example, in the configurations shown in Figs. 7 and 8 the stem is in an extension configuration, while in the configuration of Fig. 9 the stem is in configuration of completed retraction; in Figs. 10 and 11 there is a better view of a guide device for the cylinder (5) which decisively eliminates the possibility of inflection of the stem (51) when it is extended, that is when it projects outside the sheath (50).

In the embodiment shown in the drawings, the second frame (3) comprises a support structure (33) formed by four rectangular-section tubular elements. The structure (33) is movable, under the action of the cylinder (50), along a corresponding sliding portion (23) of the first frame (2). The second frame (3) can therefore be moved with respect to the first frame (2) thanks to the action of the cylinder (50) to slide bidirectionally along the sliding portion (23) which constitutes, in practice, a guide rail for the structure (33).

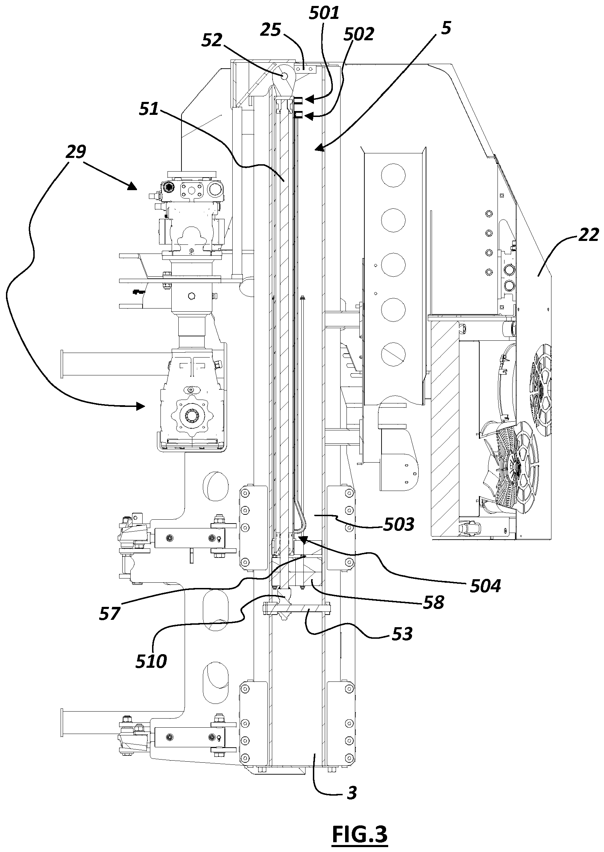

Fig. 3 shows a representation of the cylinder (50) inside which the stem (51), moved by the action of a fluid passing through the extension (501) and retraction (502) fittings, is sliding. In particular, the retraction fitting (502) is provided with a return duct (503) which moves the inlet of the retraction fitting (504) into the cylinder to an additional fitting (502) located downstream, in the proximal zone of the cylinder (50) in correspondence of the fixing point (25) to the frame (2), to the secondary inlet (502) which is arranged at the distal region of the cylinder (50).

With reference to Figs. 10 and 11, the guide device for the cylinder (5) comprises a rod (54) arranged parallel to the stem (51) and provided with two ends (55) and (56) which have a greater cross-section than the remaining part of the same rod (54). The guiding device for the cylinder (5) further comprises a first guide element (57) and a second guide element (58).

The first guide element (57) is arranged near the distal end of the sheath (50), or of the end of the sheath (50) placed on the right in the reference of Figs. 10 and 11. The first guide element (57) has a through seat (570) of a diameter substantially corresponding to that of the rod (54) and lower than that of the ends (55, 56) of the same rod (54).

The second guide element (58) is provided with a first through seat (580), of a diameter substantially corresponding to that of the rod (54) and lower than that of the ends (55, 56) of the same rod (54), and of a second through seat (581) of a diameter substantially corresponding to that of the stem (51).

The rod (54) is passing through the two seats (570) and (580) presented by the two guide elements (57) and (58), with the ends (55) and (56) of the rod (54) placed outside said elements (57) and (58), respectively on the left and on the right side, while the stem (51) is arranged to pass through the second seat (581) of the second guide element (58), the sliding of said stem (51) with respect to said second seat (581) being made with slight interference. In practice, when the stem (51) is moved, it moves the second element (58). Moreover, the stem (51), near its end (510) in which it is fixed to the connecting element (53), has a larger section (511) with respect to the remaining part of the same stem (51).

In the extension movement of the cylinder (5), the stem (51) is pushed out of the sheath (50) (to the right in the arrangement of Figs. 10 and 11) and drags along its run, together with the second frame (3), the second guide element (58) by sliding the rod (54) through the seat (570) of the first element (57).

The maximum extension of the stem (51) corresponds to a limit stop of the rod (54), whose end (55) placed on the left goes against the outer face (facing left) of the first guide element (57), and whose end (56) on the right goes against the outer face (facing right) of the second guide element (58).

The presence of the rod (54) contributes to increasing the flexural strength of the rod (51) since the same rod (51), together with the rod (54) and the two guide elements (57) and (58) substantially defines a quadrilateral with the hinges fixed at 90 °.

Still with reference to Figs. 10 and 11, the return stroke of the rod (51), i.e. the retraction movement of the cylinder (5), causes the second element (58) to move to the left, pushed by the larger section (511) of the stem (51), until the second element (58) goes against the first element (57) in correspondence with the maximum retraction configuration shown in Fig. 10.

The length of the rod (54) can be, for example, of a value substantially equal to about half the value of the extension of the stem (51) outside the sheath (50).

The structure (33), besides allowing the sliding of the second frame (3) along the first frame (2), allows the sliding of the carriage (4) along the same second frame (3).

Similarly to what is provided for the first moving means (5) acting between the first frame (2) and the second frame (3), between the second frame (3) and the carriage (4) are provided second moving means (6) which are shaped so as to move the carriage (4) bidirectionally with respect to the second frame (3), always along a substantially orthogonal direction with respect to the moving direction (V) of the driving machine (M).

The second movement means (6) comprise two cylinders (60, 62) whose sheaths are integral with one another and whose stems (61, 63) are arranged opposited, with a first head (611) of a first stem (61) integral with the structure (33) of the second frame (3) and with a second head (631) of a second stem (63) integral with the carriage (4). In this way, it is possible to obtain a displacement of the carriage (4) with respect to the second frame (3) considerably high if compared to the longitudinal encumbrance of the cylinders (60, 62) since the strokes of the two stems (61, 63) are added together in the maximum extension configuration.

With reference to the accompanying drawings, in the first cylinder (60) the stem (61) slides, whose foot (610) is integral with the piston, while the head (611) is integral with the second frame (3); in the second cylinder (62) the stem (63) slides, whose foot (630) is integral with the piston, while the head (631) is integral with the carriage (4). The first cylinder (60) is provided with extension fittings (600) and retraction fittings (601); the second cylinder (62) is provided with extension fittings (620) and retraction fittings (621).

In particular, the sheaths of the two cylinders (60, 62) are contained in a box-shaped body (66) which is slidable along the elements (33) of the second frame (3) thanks to L-shaped or C-shaped arms (67) which copy a corresponding profile of the structure (33) allowing the sliding of the carriage (4) along the second frame (3) thanks to friction reduction means provided between the respective contact surfaces. In practice, the arms (67) constitute a sort of carriages which envelope the two tubular elements (33) arranged externally, i.e. from the side of the apparatus (1) facing the working head (T).

The connections of the hydraulic circuits for moving the second frame (3) and the carriage (4) can be housed, in a per se known manner, in relative cable-carrying chains (9).

Advantageously, the depth of the space, i.e. the space occupied in a direction parallel to that of the advancement (V) of the machine, is extremely reduced since the encumbrance of the second frame (3) is substantially contained in the first frame (2) and the overall dimensions of the carriage (4) are substantially contained in the second frame (3).

In other words, the apparatus (1) makes it possible to move the carriage (4) (and the head supported by it cantilevered, that is without engaging the lateral areas of the apparatus) along the entire width of the second frame (3), i.e. along a direction substantially orthogonal to that indicated by (V) in the drawings.

The second moving means (6) acting between said second frame (3) and said carriage (4) therefore comprise a guide defined by the structure (33) and moving means (6) which comprise the two cylinders (60) and (62) and allow the carriage (4) to slide along the entire length of the second frame (3). The carriage (4) can be placed at any point without any moving means projecting laterally to the apparatus.

The solution which provides the means for moving the carriage (4) comprising the two cylinders (60) and (62) connected together so as to present the opposite stems (61, 63) provides a solution to the drawbacks of the known art which results new and extremely advantageous also for the production and maintenance costs of the apparatus (1).

In the example, the working head (T) consists of a shredder which is supported by a main pin (400) carried by the carriage (4) and that can be moved thanks to a cylinder (401). The representation of a shredder as a working head (T) carried by the carriage (4) is only an example; moreover, the working head (T) can be associated with the carriage (4) not only as shown in the drawings but also in other ways such as, for example, through an articulated arm or other connection and movement structure, depending on the characteristics and how to use the same operating head.

In practice, the apparatus (1) allows an articulated and complete movement, thanks to the high possibility of moving the supported working head or tool (T) with respect to the frame (2) connected to the self-propelled machine. In this way it is possible to reach areas more or less close to the path of the self-propelled machine that carries the apparatus, both to the right and to the left than to the center, according to different inclination planes of the working head and at different heights. The tool (T), which is supported by the carriage (4) on the opposite side with respect to the tractor (M), can be moved along the whole transverse development of the second frame (3).

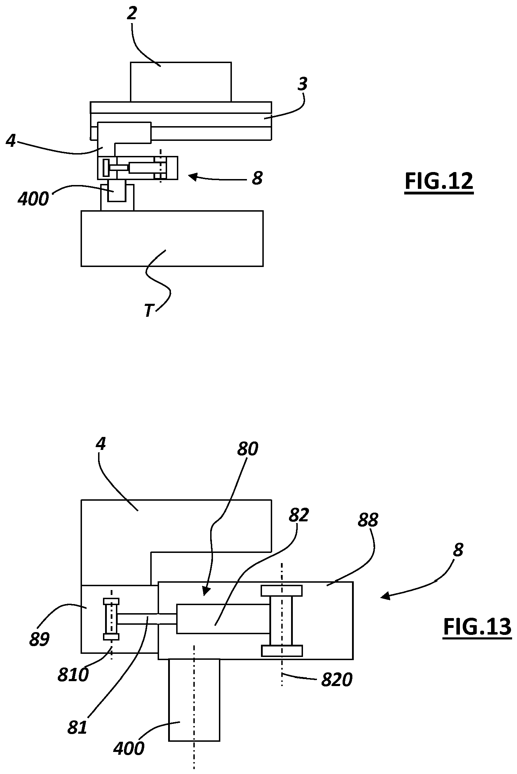

Figs. 12-15 show a schematic representation of a possible embodiment of an additional connecting and moving element (8) shaped so as to be arranged and acting between the carriage (4) and the working head (T); the element (8) is provided with moving means (80) apt to vary the distance between said carriage (4) and said moving head (T).

In this way it is possible to further extend the operating head (T), for example outwards, i.e. to the right in the reference of Fig. 12. In practice, between the first frame (2) and the second frame (3) are provided bi-directional translation means (for example those indicated with 5 in the present description), bi-directional translation means are provided between the second frame (3) and the carriage (4) (for example those indicated with 6 in the present description), and between the carriage (4) and the member (400) supporting the work head (T) there is provided the additional element (8) which allows the bi-directional movement of the member (the pin 400 in the example) in respect to the carriage (4). In another embodiment of the additional movement element (8), shown in Figs. 20-27, the additional moving element (8) acts between the carriage (4) and the work head (T), with the member (400) that remains integral with the carriage (4).

In the example shown in Figs. 12-15, the moving means (80) of the additional element (8) comprise a proximal portion (89) integral with the carriage (4) and a distal portion (88) integral with the pin (400).

In particular, with reference to Figs. 12-14, the moving means comprise a cylinder (80) whose stem (81) is fixed to the proximal portion (89) (and therefore to the carriage 4) and whose sheath (82) is fixed to the distal portion (88) (and therefore to the pin 400). In the drawings, the references (810) and (820) indicate, respectively, the possible hinging axes between the stem (81) and the proximal portion (89) and between the sheath (82) and the distal portion (88).

The portions (88) and (89) can comprise box-shaped bodies which are firmly fixed to the carriage (4) and to the pin (400), for example by welding and/or bolting or other convenient joining means.

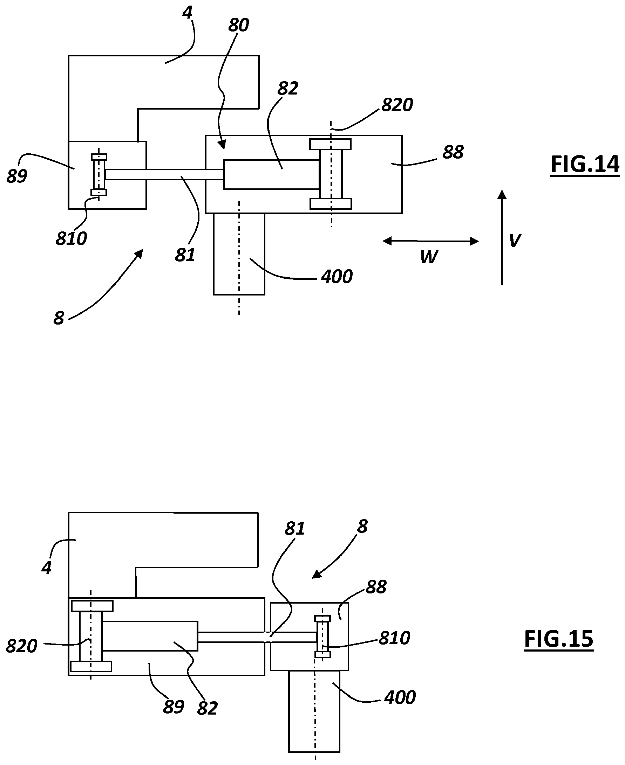

In the example of Fig. 15, contrary to Figs. 12-14, the stem (81) is fixed to the distal portion (88) while the sheath (82) is fixed to the proximal portion (89).

In the examples of Figs. 12-15 the cylinder (80) is arranged horizontally to allow a further extension of the head (T) in a lateral direction (W) with respect to the apparatus (1), i.e. laterally with respect to the moving direction (V) of the tractor (M).

The cylinder (80) can also be placed vertically, as in the examples of Figs. 16-19 to allow an additional vertical movement (in the direction indicated by the arrows K in the drawings).

This feature can be extremely useful, for example, to approach the ground when the apparatus is working on rough ground or on a slope. The numbering used in these last figures is the same used in Figs. 12-15.

In practice, in the example of Figs. 16 and 17, the cylinder (80) is fixed with the stem to a portion (89) of the additional element (8) which is integral with the carriage (4) while the sheath (82) is fixed to the portion (88) which is integral to the support for the working head (T), i.e. to the pin (400).

In the example of Figs. 18 and 19 the cylinder (80) is fixed with the sheath (82) to the portion (88) integral with the carriage and with the stem (81) to the portion (89) which is integral to the support (400) for the working head (T) .

Figs. 20-27 show an exemplary embodiment of the additional connecting and moving element (8) which is particularly advantageous due to the conformation of the means for moving the head (T) with respect to the carriage (4) as well as the transmission means of the fluid for the movement of the same head (T).

In Fig. 20 the carriage (4) is schematically represented by a block in a discontinuous section and the pin (400) is represented by its longitudinal axis.

In the examples of Figs. 20-27, the additional element (8) is composed of a proximal portion (89) which is fixed to the carriage (4) and a distal portion (88) integral with the head (T).

In practice, the proximal portion (89) is formed by a longitudinally extending guide along which the distal portion (88) slides bi-directionally, to allow a further extension of the head (T) in a lateral direction (W) with respect to the apparatus (1), i.e. laterally with respect to the moving direction (V) of the driving machine (M).

The proximal portion (89) is fixed to the carriage (4) by means of a bracket (801) and a perforated portion (802) adapted to receive the pin (400) presented by the carriage (4).

The working head (T) is mounted on the distal portion (88), which is fitted on the proximal portion (89) and slides along the latter.

The bidirectional movement (W) of the distal portion (88) and of the head (T) along the guide (89) defined by the proximal portion is achieved by means of an actuator (80) which can be constituted by a hydraulic jack whose sheath (82) it is integral with the proximal portion (89) and whose stem (81) is integral with the distal portion (88) and therefore with the working head (T). The extension of the jack (80) determines the corresponding displacement towards the outside of the working head (T) which can be further moved with respect to the carriage (4) that supports it. To the lateral movement determined by the displacement of the first frame (2) with respect to the second frame (3) and of the carriage (4) with respect to the second frame (3), is added this further movement between the carriage (4) and said work head (T), which helps to further expand the area of action of the head (T).

With reference to the drawings, the supply ducts (803, 804) of the engine (MT) of the head (T) are arranged parallel to the actuator (80); advantageously the ducts (803, 804) consist of rigid telescopic tubes which pass inside the portions (89) and (88), thus eliminating the flexible and substantially external tubing which is usually used for moving the operating heads. The ducts (803, 804) can be made of metal or a convenient material, including plastic; the term rigid means that they are able to offer resistance to the action of external forces tending to deform them; in other words, they do not have the typical flexibility of flexible hydraulic fittings or pipes.

In particular, there are two main ducts (803) intended respectively and alternately for the delivery and return of the fluid which, pushed by a pump (not visible in the drawings of Figs. 20-27), is intended for the motor (MT) of the head (T) i.e. for the movement of the cutting (or other types) devices provided on it. Furthermore, a third duct (804) is provided for drainage, that is to recover any leakage to convey it to a tank (also not shown).

The supply ducts (803, 804) are connected upstream (on the side of the carriage 4) and downstream (on the side of the head T) through relative connections (807).

The supply ducts (803, 804) are of the telescopic type and therefore can advantageously adapt to the extension of the additional element (8) while maintaining a considerable rigidity and resistance to stresses, in particular flexural stress. The drawings show a possible and effective example of connection between the proximal portion (805) and the distal portion (806), which in the example is smaller in diameter than the previous one. The connection is made through a sleeve (813) composed of two heads (814) joined by bolts (815). Inside the heads (814) there is a head body (816) fitted and keyed to the proximal portion (805) and internally provided with suitable gaskets and/or scraper elements (817) which guarantee the tight of the connection. The distal portion (806) therefore slides tightly inside the proximal portion (805). Inside both the portions (805, 806) the oleodynamic fluid passes, which can pass between an upstream opening (819) connected to the fittings (807) directed towards the carriage (4) and a downstream opening (818) where the fittings (807) are provided directed to the motor (MT) or to other suitable members operated by an oleodynamic / hydraulic circuit.

The extension of the additional element (8) is made considerably solid and safe thanks to a support element (808) through which the cylinder (80) and the supply pipes (803, 804) pass. With specific reference to Fig. 21, the cylinder (80) and the feeding tubes (803, 804) protrude from the body of the proximal portion (89) through a perforated end element (881). In particular, the end element (881) is provided with a series of through holes which are traversed by the cylinder (80) and the supply tubes (803, 804); on the same cylinder (80) and on the supply tubes (803, 804) the supporting element (808) is fitted which has a series of through holes which have the same arrangement (or predetermined arrangement) of the holes of the terminal element (881).

Between the support element (808) and the terminal element (881) there is a mechanical end-stop (809) provided with a distal end (811) intended to engage with the support element (808) and a proximal end (812) intended to engage with the end element (881).

The presence of the support element (808) helps to considerably stiffen the additional element (8) since it drastically reduces the free length of the same subjected to bending stresses.

Lastly, it should be noted that some of the movement, command and control members of the elements described above and illustrated in the attached drawings are of the type known to the automation technicians and, therefore, have not been described in further detail for the sake of simplicity. Moreover, the details of execution may in any case vary in an equivalent manner in the form, dimensions, arrangement of the elements, nature of the materials used, without however departing from the scope of the inventive concept of the invention and therefore remaining within the limits of the protection granted by the present patent.

## Claims

1. Apparatus for supporting a working head (T), usable interposed between a driving machine (M) and a working head (T) for transmitting motion from the driving machine (M) to the working head (T) and to move the latter with respect to the driving machine (M) and comprising:
- a first frame (2) provided with means for connection to the driving machine (M);
- a second frame (3) connected to the first frame (2);
- first moving means (5) arranged and acting between said first frame (2) and said second frame (3), adapted to translate the second frame (3) bidirectionally with respect to the first frame (2) along a direction substantially orthogonal to the moving direction of the driving machine (M);
- a carriage (4) provided with support and connection means (41, 42) for a working head;
- second moving means (6) arranged and acting between said second frame (3) and said carriage (4), adapted to translate the carriage (4) bidirectionally with respect to the second frame (3) along a direction substantially orthogonal to the moving direction of the driving machine (M);
apparatus (1) **characterized in that** it comprises an additional connecting and moving element (8) shaped so as to be arranged and acting between said carriage (4) and said working head (T), and provided with moving means (80) adapted to vary the distance between said carriage (4) and said working head (T), said moving means (80) comprising a proximal portion (89) integral with said carriage (4) and a distal portion (88) integral with said working head (T).

2. Apparatus according to claim 1, **characterized in that** said distal portion (88) is mounted on said carriage (4) and that said working head (T) is mounted on the distal portion (88), which is fitted on the proximal portion (89) and slides along it.

3. Apparatus according to claim 1 and / or 2, **characterized in that** it is provided with supply ducts (803, 804), to supply a fluid for a motor (MT) arranged on said working head (T), consisting of rigid telescopic tubes passing inside the portions (89) and (88).

4. Apparatus according to claim 3, **characterized in that** it comprises two main ducts (803) intended respectively and alternately for the delivery and return of the fluid and a third conduit (804) intended for drainage.

5. Apparatus according to claim 3, **characterized in that** said moving means (80) comprise a cylinder (80) and **in that** said cylinder (80) and said supply ducts (803, 804) are arranged parallel to each other and they exit from said proximal portion (89) through a perforated end element (881) in which the holes are arranged according to a predetermined arrangement, a support element (808) being provided, fitted on said cylinder (80) and said supply ducts (803, 804), and which has a series of through holes which have the same arrangement of the holes of the end element (881).

6. Apparatus according to claim 5, **characterized in that** it comprises a mechanical end-stop (809), arranged between said supporting element (808) and said end element (881) provided with a distal end (811) intended to engage with the supporting element (808) and a proximal end (812) intended to engage with the end element (881).

7. Apparatus according to claim 3, **characterized in that** said supply conduits (803, 804) comprise a proximal portion (805) and a distal portion (806) of smaller diameter than the proximal one (805), and **in that** the connection between said portions (805, 806) is achieved by means of a sleeve (813) composed of two heads (814) joined by bolts (815), inside the heads (814) a head body (816) being provided fitted and keyed on the proximal portion (805) and internally provided with suitable gaskets (817) which guarantee the connection is sealed, allowing the distal portion (89) to slide tightly inside the proximal portion (805).

8. Apparatus according to claim 1, **characterized in that** said portions (88) and (89) comprise box-shaped bodies that can be firmly fixed to the carriage (4) and / or to a support (400) and / or to the working head (T).

9. Apparatus according to claim 1, **characterized in that** said moving means (80) comprise a cylinder (80) arranged horizontally.

10. Apparatus according to claim 1, **characterized in that** said moving means (80) comprise a cylinder (80) arranged vertically.

11. Apparatus according to one of the preceding claims, in which the said second moving means (6) are able to translate the said carriage (4) to a value substantially corresponding to the extension in this direction of the said second frame (3) and **characterized in that** said second moving means (6) comprise a first and a second cylinder (60A, 62A) whose sheaths (60, 62) are integral with each other and whose stems (61, 63) are arranged opposited, with a first head (611) of a first stem (61) integral with the second frame (3) and with a second head (631) of a second stem (63) integral with the carriage (4).

12. Apparatus according to claim 11, **characterized in that** the sheaths (60, 62) of said cylinders (60A, 62A) are joined together.

13. Apparatus according to claim 11, **characterized in that** the sheaths (60, 62) of said cylinders (60A, 62A) are made integral with one another through a box-like body (66) which contains the same sheaths (60, 62); a first proximal end (602) of the sheath of said first cylinder (60) and a second proximal end (622) of the sheath of the second cylinder (62) being integral with the box-like body (66).

14. Apparatus according to claim 11, **characterized in that**:
- in said first cylinder (60A) the stem (61) slides, whose foot (610) is integral with the piston of the same cylinder (60A) or forms the same piston, while the head (611) is integral with the second frame (3), the proximal end (602) of said first sheath (60) is integral with the box-shaped body (66);
- in the second cylinder (62A) the stem (63) slides, whose foot (630) is integral with the piston of the same cylinder (62A) or forms the same piston, while the head (631) is integral with the carriage (4) and the proximal end (622) of said second sheath (62) is integral with the box-like body (66).

15. Apparatus according to one of claims 11 to 14, **characterized in that**:
- said first moving means (5) comprise a cylinder (5) and a guide device for said cylinder (5) comprising a rod (54) arranged parallel to the stem (51) of said cylinder (5), a first guide element (57) and a second guide element (58); said rod (54);
- said rod (54) is provided with a first (55) and a second end (56) which have a greater cross section than the remaining part of the rod (54);
- the first guide element (57) is arranged near the distal end of the sheath (50) of said cylinder (5);
- the first guide element (57) has a through seat (570) of a diameter substantially corresponding to that of the rod (54) and lower than that of the ends (55, 56) of the same rod (54);
- the second guide element (58) is provided with a first through seat (580), of a diameter substantially corresponding to that of the rod (54) and lower than that of the ends (55, 56) of the same rod (54), and a second through seat (581) of a diameter substantially corresponding to that of the stem (51);
- the rod (54) is passing through the two seats (570) and (580) presented by the two guide elements (57) and (58), with the ends (55) and (56) of the rod (54) placed outside the said elements (57) and (58);
- the stem (51) is arranged to pass through the second seat (581) of the second guide element (58).
